Europäisches Patentamt

European Patent Office

Office européen des brevets

(11) Veröffentlichungsnummer: **0 180 741**
**A1**

(12) # EUROPÄISCHE PATENTANMELDUNG

(21) Anmeldenummer: 85111635.0

(22) Anmeldetag: 14.09.85

(51) Int. Cl.⁴: **C 21 C 7/00**
**B. 22 D 41/00, C 21 C 5/52**

(30) Priorität: 11.10.84 DE 3437333
30.11.84 DE 3443740

(43) Veröffentlichungstag der Anmeldung:
14.05.86 Patentblatt 86/20

(84) Benannte Vertragsstaaten:
AT FR GB IT

(71) Anmelder: Fried. Krupp Gesellschaft mit beschränkter Haftung
Altendorfer Strasse 103
D-4300 Essen 1(DE)

(72) Erfinder: Bebber, Hans Josef, Dr. rer. nat.
Konrad-Steller-Strasse 9
D-4330 Mülheim 12(DE)

(72) Erfinder: Neuschütz, Dieter, Dr.-Ing.
Neckarstrasse 49
D-4300 Essen 18(DE)

(72) Erfinder: Rossner, Heinrich-Otto, Dipl.-Ing.
Pettenkoferstrasse 18
D-4300 Essen 1(DE)

(54) Verfahren und Vorrichtung zum Halten oder Erhöhen der Temperatur einer Metallschmelze.

(57) Bei diesem Verfahren wird die Temperatur einer nach dem Abstich aus dem Schmelzofen in einem Aufnahmegefäß befindlichen Schmelze dadurch gehalten oder erhöht, daß ihr Energie über mindestens zwei mit Wechselstrom betriebene, wassergekühlte und mit gegenüber der Metallschmelze inertem Gas arbeitende Plasmabrenner mit übertragenem Lichtbogen zugeführt wird.

Dabei sollen die Brennflecke der von den einzelnen Plasmabrennern erzeugten Lichtbögen auf dem Badspiegel der Metallschmelze von der Mittelachse des Aufnahmegefäßes vorzugsweise einen Mittenabstand aufweisen, der 3/10 des Radius der Innenwand des Aufnahmegefäßes in Höhe des jeweiligen Badspiegels nicht überschreitet.

Die Vorrichtung zum Durchführen des Verfahrens weist ein Aufnahmegefäß mit einer Abdeckung (5) auf, die mit gasdicht ausgebildeten Durchlaßöffnungen (18) für die Plasmabrenner (14) versehen ist.

FIG.1

EP 0 180 741 A1

FRIED. KRUPP GESELLSCHAFT MIT BESCHRÄNKTER HAFTUNG
in Essen


Verfahren und Vorrichtung zum Halten oder Erhöhen der
Temperatur einer Metallschmelze


Die Erfindung betrifft ein Verfahren nach dem Oberbegriff des Anspruchs 1 sowie eine Vorrichtung zum Durchführen des Verfahrens.


Sowohl beim Abstich aus dem Schmelzofen, während der metallurgischen Nachbehandlung, bei einem Pfannentransport und während des Abstehens und während des Abgießens der Schmelze insbesondere in einen Tundish einer Stranggußanlage treten Temperaturverluste auf. Metallurgische Nachbehandlungen können bei Stahlschmelzen beispielsweise das Legieren, Inertgas-Spülen, Einblasen von Entschwefelungsmitteln und die Vakuumentgasung der Schmelze zum Zwecke der Einstellung der gewünschten Zusammensetzung, der Desoxidation und Abscheidung der Desoxidationsprodukte, der Homogenisierung, der Entschwefelung und Herabsetzung der Gehalte an Wasserstoff und Stickstoff des Metalls sowie eine kontrollierte Einstellung der Gießtemperatur sein. Derartige Nachbehandlungen können beispielsweise in der Gießpfanne, in einem Vakuumbehandlungsgefäß oder in einem Tundish durchgeführt werden. Als Aufnahmegefäße im Sinne der Erfindung zählen also auch Gefäße, die die Schmelze unter Bildung einer Stauhöhe durchfließt.


Es ist möglich, die beschriebenen Temperaturverluste durch entsprechendes Überhitzen der Schmelze im Schmelzofen zu kompensieren. Dabei muß aber in Kauf genommen werden, daß das Ofenfutter durch die höhere Temperatur stärker belastet wird und daß die Produktionsrate des Schmelzofens durch die für das Überhitzen notwendige Zeit gedrosselt wird.

Es ist bekannt, die Wärmeenergie, die der Metallschmelze in der beschriebenen Weise verloren geht,
durch eine außerhalb des Schmelzofens befindliche
Heizeinrichtung wieder zuzuführen. Solche Heizeinrichtungen, die sich im allgemeinen in der Gießpfanne
befinden, sind mit je drei Graphitelektroden arbeitende
Drehstrom-Lichtbogenbeheizer, die für jede einzelne
der schweren Graphitelektroden eine aufwendige Hubkonstruktion und Elektrodenregelung zur schnellen
Auf- und Abbewegung besitzen. Bedingt durch die Elektrodendurchmesser, die Abmessungen der Stromzuführrungen und der Elektrodenhalterungen ist der Abstand
zwischen den Elektroden relativ groß bzw. der Abstand
zur Pfannenwand entsprechend gering. Außerdem brennen
die ohnehin schon wenig stabilen Drehstromlichtbögen
der Graphitelektroden durch elektromagnetische Kräfte
in Richtung auf die Pfannenwand, wodurch diese thermisch
sehr stark belastet wird und der Verschleiß des Pfannenfutters entsprechend hoch ist. Zur Vermeidung dieser
Nachteile werden die Graphitelektroden zwar mit möglichst
kurzen Lichtbögen betrieben, dadurch wird jedoch die
Gefahr des Wiederaufkohlens der Schmelze durch Elektrodengraphit erhöht. Der bekannten Heizvorrichtung haftet
weiterhin der Nachteil an, daß die Durchführungen in
der Pfannenabdeckung gegen die heißen Graphitelektroden
nur durch aufwendige konstruktive Maßnahmen gasdicht
herzustellen sind, so daß das Eindringen von für die
metallurgische Behandlung schädlicher Luft durch kostenaufwendiges Einblasen von Inertgas unter erhöhtem Druck
verhindert werden muß.

Zur Vermeidung eines vorzeitigen Wandverschleißes ist
es bekannt, eine aus zwei Graphitelektroden bestehende
Elektrodenanordnung in die Metallschmelze einzutauchen,
wobei die innere stabförmige Elektrode gegenüber der äußeren rohrförmigen Elektrode zurück versetzt ist. Bei dieser bekannten Heizvorrichtung besteht aber die Gefahr der Aufkohlung der Metallschmelze. Außerdem unterliegt die äußere rohrförmige Elektrode einem großen Verschleiß.

Weiterhin ist noch eine induktive Beheizung von Metallschmelzen bekannt, wozu jedoch die Ausrüstung sämtlicher in Frage kommender Aufnahmegefäße mit Induktionsspulen erforderlich wäre. Außerdem ist auch bei dieser Beheizungsart ein nicht unerheblicher Verschleiß des Pfannenfutters gegeben.

Der Erfindung liegt die Aufgabe zugrunde, ein Verfahren zum Halten oder Erhöhen der Temperatur einer nach dem Abstich aus dem Schmelzofen in einem Aufnahmegefäß befindlichen Metallschmelze durch Zuführen von Energie anzugeben, bei dem die Metallschmelze chemisch nicht beeinflußt und die Wand des Aufnahmegefäßes geschont wird. Die mit Elektroden versehene Vorrichtung zur Durchführung des Verfahrens soll so ausgebildet sein, daß sich eine verbesserte Abdichtung der Abdeckung des Aufnahmegefäßes gegen die Atmosphäre ergibt. Außerdem soll die Vorrichtung einfach und klein bauen, um auch einen nachträglichen Einbau in vorhandene Anlagen zu ermöglichen.

Diese Aufgabe wird - soweit sie das Verfahren betrifft - durch die im Anspruch 1 angegebenen Merkmale gelöst. Durch die Wasserkühlung weisen die Plasmabrenner an ihrem hinteren Ende eine Temperatur auf, die eine gasdichte Abdichtung der Durchführung in der Abdeckung des Aufnahmegefäßes gegen den Plasmabrenner ermöglicht. Da Plasmabrenner bei gleicher Heizleistung einen deutlich kleineren Durchmesser aufweisen als Graphitelektroden, können die Brennflecke bei dem erfindungsgemäßen Verfahren weiter von der Wand in Richtung auf die Mitte des Gefäßes verlegt werden, wodurch die Innenwand des Gefäßes thermisch entlastet wird.

Durch die Begrenzung des Mittenabstandes der Brennflecken von der Mittelachse des Aufnahmegefäßes nach Anspruch 2 wird die gewünschte Schonung der Gefäßinnenwand in besonderer Weise gefördert. Bei der normalerweise symmetrischen Anordnung der Plasmabrenner ergibt sich ein durch die Brennflecken gegebener Teilkreis, dessen Durchmesser dem doppelten Mittenabstand der Brennflecke von der Mittelachse des Aufnahmegefäßes entspricht. Bei nicht rotationssymmetrischen Gefäßen ist das Verhältnis nach Anspruch 2 auf die Abmessungen von der Symmetrieebene des Gefäßes entsprechend anzuwenden.

Zweckmäßige Weiterbildungen der Erfindung sind in den Unteransprüchen beschrieben. So kann durch die Verwendung von Argon gemäß Anspruch 3 sowohl eine Aufkohlung als auch eine Anreicherung mit Stickstoff wirksam vermieden werden. Die in den Ansprüchen 4 und 5 angegebenen Bereiche der Lichtbogenlänge gewährleisten eine sichere Energiezufuhr und die Einhaltung der Betriebsgrößen gemäß Anspruch 6 ein einwandfreies Betreiben des Verfahrens.

Die in den Ansprüchen 7 und 8 beschriebenen Maßnahmen weisen einen vorteilhaften Weg, die Beschränkung des Mittenabstandes der Brennflecke von der Mittelachse des Aufnahmegefäßes zu erreichen.

Beim Betreiben des Verfahrens nach den Ansprüchen 10 und 11 ist der Strompfad durch die Plasmabrenner, die von den Plasmabrennern erzeugte Lichtbogensäule und die Metallschmelze gegeben. Ein derartiges Betreiben erübrigt somit die Anordnung einer aufwendigen Gegenelektrode am Aufnahmegefäß.

Durch das Eingeben von inertem Gas von unten in die Metallschmelze wird diese in Bewegung versetzt, so daß sich die durch die Plasmabrenner eingegebene Wärmeenergie gut verteilt.

Durch das seitliche Eingeben von inertem Gas in die Metallschmelze aus einer gleichmäßigen Höhe wird die von den Plasmabrennern eingebrachte Wärmeenergie bevorzugt in der über dieser Höhe befindlichen Schicht der Metallschmelze verteilt. Dadurch wird ein Temperaturgradient erreicht, der ein abschnittsweises Vergießen der Schmelze ermöglicht.

Die im Anspruch 13 beschriebene Maßnahme ermöglicht auf einfache Weise ein sicheres Zünden der Plasmabrenner.

Um das Betreiben des Verfahrens frei von schädlichen Lufteinflüssen zu ermöglichen, wird der über der Metallschmelze befindliche Raum des Aufnahmegefäßes vor dem Zünden der Plasmabrenner nach Anspruch 15 mit Inertgas gefüllt.

Durch das Zünden der Plasmabrenner untereinander und deren Absenken und Annähern an die Metallschmelze kann eine etwa vorhandene Schlackenschicht aufgeschmolzen und damit der Stromfluß in und durch die Metallschmelze ermöglicht werden.

Die zur Durchführung des Verfahrens vorgesehene Vorrichtung weist eine gasdichte Abdeckung auf, wobei die Abdeckung infolge der niedrigen Temperatur der Plasmabrenner in einfacher Weise durch einen Rundschnurring herbeigeführt werden kann.

Da die Plasmabrenner gegenüber den Graphitelektroden eine wesentlich größere Streuung der Lichtbogenlänge zulassen, kann die Vorrichtung nach Anspruch 18 in vorteilhafter Weise mit einer für alle Plasmabrenner gemeinsamen Halteanordnung und Hubvorrichtung ausgebildet werden. Die Plasmabrenner können dabei in einfacher Weise in einem Bodeneinsatz eines Rohres befestigt sein, so daß lediglich eine einzige Durchlaßöffnung in der Abdeckung des Aufnahmegefäßes gasdicht abgedichtet werden braucht. Um mit einer möglichst geringen Bauhöhe auszukommen, kann das Rohr teleskopartig ausgebildet werden.

Nach Anspruch 24 ist vorgesehen, die Abdeckung mit einem separaten Zentralbereich auszubilden. Soweit die Plasmabrenner mit individuellen Hubvorrichtungen versehen sind, und dies wird weitgehend dann der Fall sein, wenn sie schräg angestellt sind, sind die Hubvorrichtungen vorzugsweise an der Abdeckung des Aufnahmegefäßes befestigt. Wenn nun die Abdeckung, wie in Anspruch 24 vorgeschlagen, einen separaten Zentralbereich hat, so können die Hubvorrichtungen bei verschieden großen Aufnahmegefäßen verwendet werden, wobei die Abdeckungen der Aufnahmegefäße lediglich eine gleich große Öffnung zur Aufnahme des separaten Zentralbereichs aufweisen müssen.

Wenn die Abdeckung nicht nur als auf dem Aufnahmegefäß befindlicher Deckel, sondern wie in Anspruch 25 vorgeschlagen, als das Aufnahmegefäß aufnehmender bzw. in sich einschließender Kessel ausgebildet ist, ist es ebenfalls in vorteilhafter Weise möglich, verschieden große Aufnahmegefäße mit der gleichen Heizeinrichtung zu betreiben.

Ausführungsbeispiele des Gegenstandes der Erfindung sind in der Zeichnung dargestellt und werden im folgenden näher erläutert. Es zeigen:

Fig. 1    eine Gießpfanne und eine ihr zugeordnete Heizvorrichtung mit drei parallel zueinander angeordneten Plasmabrennern in einer schematischen Darstellung,

Fig. 2     die Gießpfanne in einem Querschnitt längs
der Linie II-II in Fig. 1,

Fig. 3     eine aus drei Plasmabrennern bestehende
Heizvorrichtung auf einem Deckeleinsatz,

Fig. 4     eine auf einem Kessel befindliche Heizeinrichtung,

Fig. 5     eine Heizvorrichtung mit drei am unteren
Ende eines gemeinsamen Tragrohres angeordneten
Plasmabrennern und

Fig. 6     ein teleskopartig ausgebildetes Tragrohr mit
zwei Plasmabrennern in einem schematisierten
Längsschnitt.

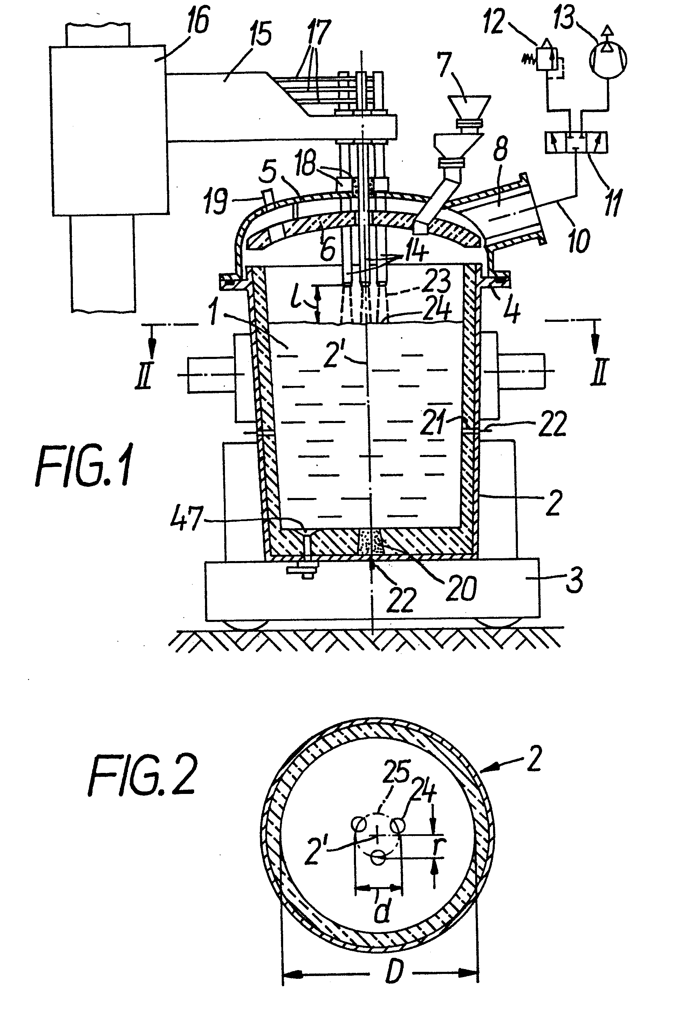

Bei dem Ausführungsbeispiel gemäß Fig.1 befindet sich
die mit flüssiger Metallschmelze 1 gefüllte Gießpfanne 2
auf einem Transportwagen 3. Auf ihrem Flansch 4 trägt
die Gießpfanne 2 einen Deckel 5, der an seiner Unterseite einen Hitzeschild 6 aus feuerfestem Material
trägt. Der Deckel weist ferner eine Dosiervorrichtung 7
für Legierungsmittel sowie einen Abgasstutzen 8 auf,
der an die in Fig. 1 nur symbolisch dargestellte Abgasleitung 10 angeschlossen ist. Die Abgasleitung 10 ist
durch ein Schaltorgan 11 alternativ über ein Druckbegrenzungsventil 12 oder eine Vakuumpumpe 13 mit der
Atmosphäre verbunden.

Die Heizeinrichtung weist drei mit Drehstorm betriebene
wassergekühlte Plasmabrenner 14 auf, die wiederum, wie
beispielsweise in der US-PS 3 147 329 beschrieben, eine
zentrische Elektrode und eine diese umgebende Brennerdüse aufweisen. Die parallel ausgerichteten Brenner werden von einem gemeinsamen Tragarm 15 gehalten, der wiederum von einer Hubvorrichtung 16 auf und ab bewegt wird. Die zu den einzelnen Plasmabrennern 14 führenden Versorgungsleitungen 17 für Strom, Wasser und Gas sind auf dem Tragarm 15 verlegt.

Zur Durchführung der Plasmabrenner 14 durch den Deckel 5 ist dieser mit gasdichten wassergekühlten Durchlaßöffnungen 18 versehen. Die Abdichtung kann dabei beispielsweise durch einen Rundschnurring erfolgen.

Der Deckel 5 weist ferner einen nach dem Echolot-Prinzip arbeitenden Lasersender 19 auf, um die Füllstandshöhe der Metallschmelze bzw. um die Höhe des Badspiegels bestimmen und die Plasmabrenner 14 entsprechend nachfahren zu können.

Die Gießpfanne 2 weist in ihrem Boden einen Spülstein 20 und in der Seitenwand - gleichmäßig am Umfang verteilt - Gaseintrittskanäle 21 auf. Sowohl der Spülstein 20 als auch die Kanäle 21 sind mit Anschlüssen 22 zur Versorgung mit Inertgas, insbesondere Argon versehen.

Zu Beginn des Verfahrens wird die Abgasleitung 10 über das Schaltorgan 11 mit dem Druckbegrenzungsventil 12 verbunden. Der Raum zwischen der Metallschmelze 1 und dem Deckel 5 wird durch die Plasmabrenner 14 unter geringem Überdruck mit Argon gefüllt, so daß die zu Anfang dort befindliche Luft durch das Druckbegrenzungsventil ins Freie entweicht. Gleichzeitig kann Argon durch den Spülstein 20 und die Kanäle 21 in die Schmelze eingegeben werden und durch sie hindurch in den Raum oberhalb des Badspiegels gelangen. Eine etwa auf der Metallschmelze 1 befindliche (nicht weiter dargestellte) Schlackenkruste kann durch das aufsteigende Gas und die damit verbundene Badbewegung aufgebrochen und zur Seite gespült werden.

Das berührungslose Zünden der Plasmabrenner 14 erfolgt mit Hilfe eines inneren Zündlichtbogens, in dem sich das hindurchströmende Plasmagas (Argon) erhitzt und einen ionsierten Gaskanal zwischen den Elektroden der Plasmabrenner 14 und der Metallschmelze 1 bildet. In diesem elektrisch leitenden Gaskanal zündet der Hauptlichtbogen 23, der - für jeden der gleichmäßig um die Mittelachse 2' der Gießpfanne 2 verteilten Plasmabrenner 14 - einen Brennflecke 24 auf dem Badspiegel der Metallschmelze 1 bildet. Die voneinander getrennten Brennflecke 24 weisen mit ihrer Mitte einen Abstand r zur Mittelachse 2' auf. Dieser Abstand r entspricht dem halben Durchmesser d eines durch die Mitte der Brennflecke 24 gedachten Teilkreises 25. Zur Schonung der Wandauskleidung der Gießpfanne 2 soll der Durchmesser d auf 3/10, vorzugsweise 2/10 des jeweiligen Innendurchmessers D der Gießpfanne 2 beschränkt bleiben. Um die durch die Plasmabrenner eingebrachte Wärme in die Metallschmelze 1 gleichmäßig in dieser zu verteilen, wird Argon durch den Spülstein 20 von unten in die Metallschmelze 1 eingegeben, die dieser eine Badbewegung verleiht, wodurch eine gleichmäßige Temperatur in der Metallschmelze 1 erreicht wird.

Wird der Pfanneninhalt in zwei Raten vergossen, so ist es vorteilhaft, die später zu vergießende obere Schicht höher zu erhitzen, was man dadurch erreicht, daß Argon durch die seitlichen Kanäle 21 in die Schmelze gegeben wird. Das nach oben steigende Argon versetzt somit nur die obere Schicht in Badbewegung, so daß die von den Plasmabrennern 14 zugeführte Wärmeenergie vorzugsweise in der oberen Schicht verbleibt und sich so ein Temperaturgradient über der Höhe der Schmelze ausbildet.

Zur Vakuumbehandlung der Metallschmelze 1 wird die Abgasleitung 10 über die Schaltvorrichtung 11 mit der Vakuumpumpe 13 verbunden. Die Plasmabrenner 14 sind während der Vakuumbehandlung nur soweit durch die Durchlaßöffnungen 18 des Deckels 5 geführt, daß die Dichtwirkung zwischen dem Deckel 5 und den Plasmabrennern 14 gewährleistet ist. Durch den dadurch gegebenen großen Abstand zur Schmelze 1 sind sie weitgehend gegen hochspritzende Teile der Metallschmelze 1 geschützt. Zum Zwecke des Beheizens werden die Plasmabrenner 14 nach der Vakuumbehandlung in ihre Betriebsposition abgesenkt.

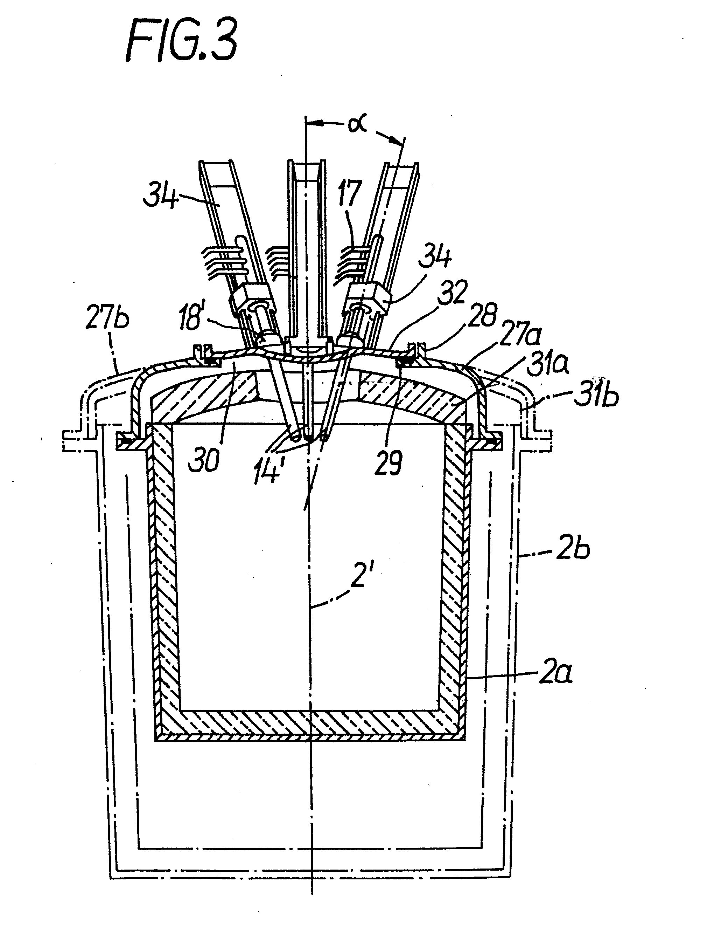

Bei dem Ausführungsbeispiel gemäß Fig. 3 ist die Gießpfanne 2a mit einer Abdeckung 27a versehen, die eine durch einen ringförmigen Kragen 28 und einen Flansch 29 gebildete zentrische Ausnehmung 30 aufweist. Die Ausnehmung 30 wird durch einen Deckeleinsatz 32 ausgefüllt, der gasdicht auf dem Flansch 29 aufliegt. Der Deckeleinsatz 32 trägt drei gleichmäßig um die Mittelachse 2' verteilte Brennerverfahreinrichtungen 34, die gegen die Mittelachse 2' unter einem Winkel α geneigt sind. Die mit ihren hinteren Enden auf der Brennerverfahreinrichtung 34 gehaltenen Plasmabrenner 14' werden durch gasdichte Durchlaßöffnungen 18' durch den Deckeleinsatz 32 hindurchgeführt.

Der Deckeleinsatz 32 kann auch in der Ausnehmung 30 einer in Fig. 3 strichpunktiert dargestellten Abdeckung 27b aufliegen, die zu einer größeren Gießpfanne 2b gehört. Somit kann die an dem Deckeleinsatz 32 befestigte, aus den Plasmabrennern 14' bestehende Heizeinrichtung für verschieden große Gießpfannen verwendet werden. Zur Anpassung an die verschieden großen Gießpfannen ist es vorteilhaft, die Schrägstellung der Brennerverfahreinrichtungen einstellbar zu gestalten.

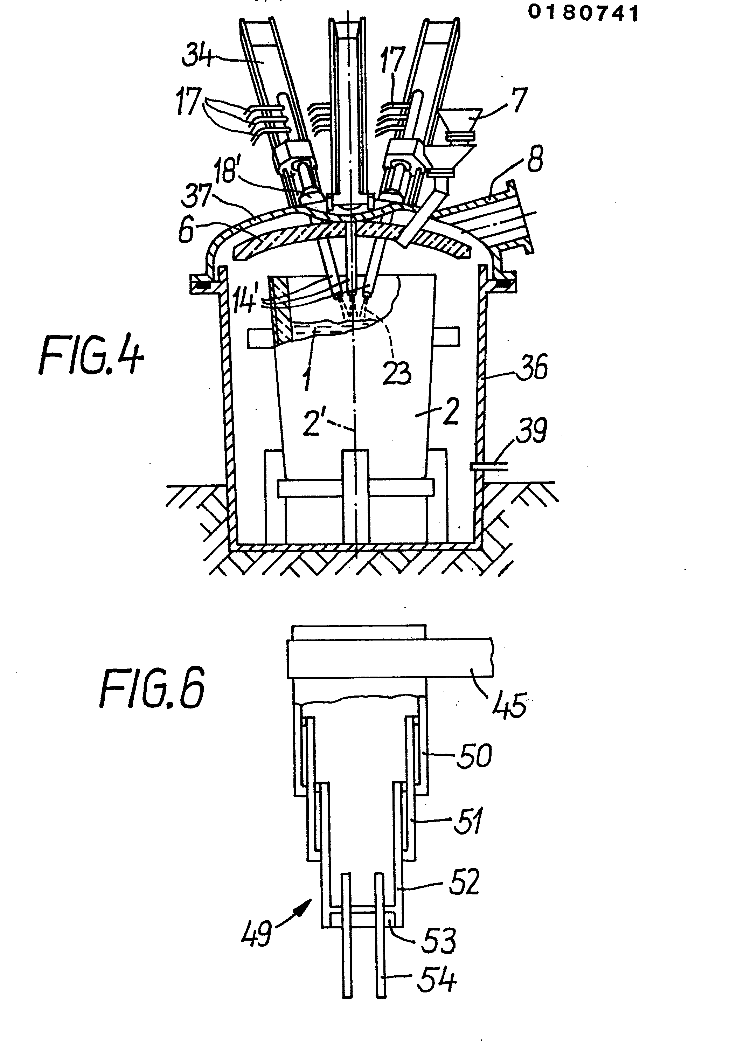

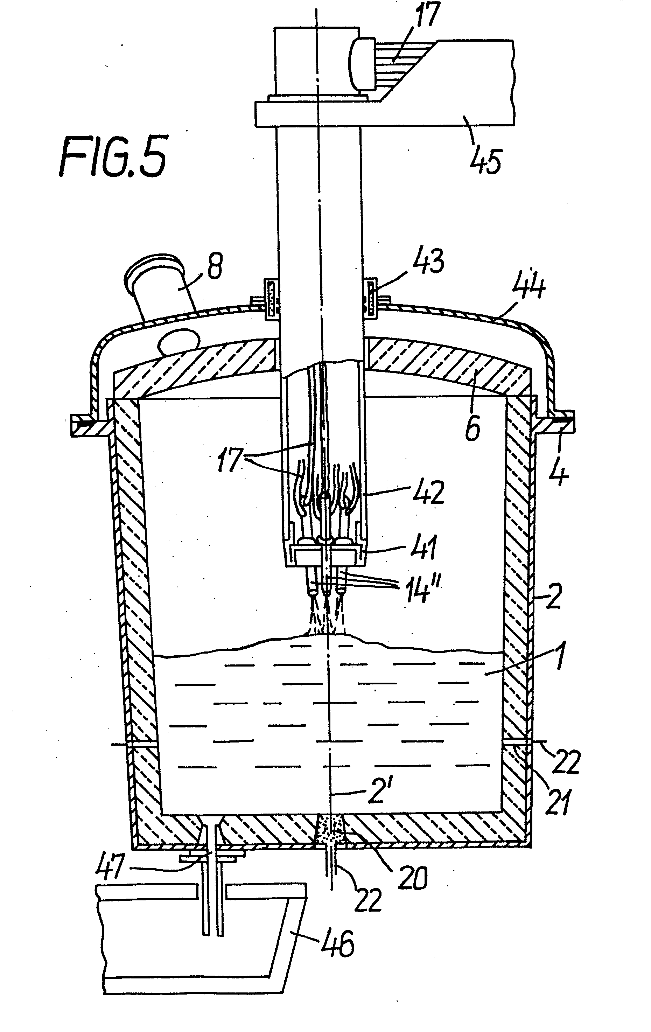

Bei dem Ausführungsbeispiel gemäß Fig. 4 befindet sich die Gießpfanne 2 in einem sie umgebenden Stahlkessel 36. Der Kessel 36 trägt einen Deckel 37 mit drei gleichmäßig um die Mittelachse 2' verteilten und in ihrer Schräglage verstellbar angeordneten Brennerverfahreinrichtungen 34. Außerdem weist der Deckel, wie bereits im Zusammenhang mit den anderen Ausführungsbeispielen beschrieben, einen Hitzeschild 6, eine Dosiervorrichtung 7 und einen Abgasstutzen 8 auf. Die Abdeckung für die Metallschmelze 1 wird bei diesem Ausführungsbeispiel durch den Deckel 37 und den Kessel 36 zusammen gebildet. In den Kessel 36 können verschieden große Gießpfannen 2 eingegeben werden, so daß der Kessel mit der die Plasmabrenner 14' aufweisenden Heizeinrichtung universell verwendbar ist. Um bereits vor dem Beheizen eine Inertgasatmosphäre im Kessel 36 zu erzeugen, ist die Kesselwand mit Düsen 39 bestückt. Das Inertgas kann sowohl durch die Brenner 14' als auch durch die Düsen 39 in den Kessel gelangen.

Zum Zünden werden die Plasmabrenner 14' derart schräg angestellt, daß sich deren Achsen in einem oberhalb des Badspiegels liegenden Punkt schneiden. Die Ströme fließen dann zunächst unmittelbar über die Elektroden der Plasmabrenner 14, ohne den Weg über das Schmelzgut zu nehmen. Durch die Bogenstrahlung wird eine etwa auf der Metallschmelze 1 vorhandene Schlackenschicht aufgeschmolzen und elektrisch leitend gemacht. Die Plasmabrenner 14' können nunmehr durch steileres Anstellen in den Betriebszustand überführt werden, wobei die Metallschmelze 1 in den Strompfad mit einbezogen wird.

Bei dem Ausführungsbeispiel gemäß Fig. 5 sind die Plasmabrenner 14" in einem Einsatzstück 41 angeordnet, das sich am unteren Ende eines Führungs- oder Tragrohres 42 befindet. Das Rohr 42 ist durch eine zentrische Durchlaßöffnung 43 im Deckel 44 geführt. Das Einsatzstück 41,
das Rohr 42 und die gasdicht gegen das Rohr ausgebildete
Durchlaßöffnung 43 sind wassergekühlt.

Darüber hinaus sind das Einsatzstück 41 und das Rohr 42
mit einer Feuerfestmasse beschichtet. Das Rohr 42 wird
von einem Tragarm 45 gehalten und von diesem durch den
Deckel 44 auf und ab bewegt. Bei dem in Fig. 5 dargestellten Ausführungsbeispiel befindet sich unter dem
Boden der Gießpfanne zur Weiterleitung der Metallschmelze in eine (nicht dargestellte) Stranggießmaschine
ein Tundish 46, der durch eine im Boden der Gießpfanne 2
befindliche, mit einem Schieberverschluß versehene
Ausflußöffnung 47 beschickt wird. Die beschriebene
Vorrichtung nach Fig. 5 erlaubt einerseits die gemeinsame Bewegung der Plasmabrenner 14" mit nur einer Hubvorrichtung und andererseits die Benutzung sehr kurzer
Plasmabrenner, was aus konstruktiven Gründen vor allem
beim Beheizen großer Schmelzmassen während des Vergießens von Vorteil ist. Die Versorgungsleitungen 17
der Plasmabrenner 14" werden durch das Rohr 42 und den
Tragarm 45 geleitet.

Bei dem Ausführungsbeispiel gemäß Fig. 6 ist das
zentrale Rohr 49 teleskopartig ausgebildet und weist
drei Rohrteile 50, 51, 52 auf, wobei das innerste Rohrteil 52 an seinem vorderen Ende ein Einsatzstück 53
aufweist, in dem zwei parallel verlaufende Plasmabrenner
54 untergebracht sind. Die beiden Plasmabrenner 54 werden
mit einphasigem Wechselstrom betrieben, wobei der Strompfad - wechselweise - von einem Plasmabrenner über die
Metallschmelze zum anderen Plasmabrenner verläuft. Durch
die teleskopartige Ausbildung des zentralen Rohres 49
lassen sich große Hubhöhen bei einer kleinen Anfangsbauhöhe realisieren.

## Patentansprüche

1. Verfahren zum Halten oder Erhöhen der Temperatur einer nach dem Abstich aus dem Schmelzofen in einem Aufnahmegefäß befindlichen Metallschmelze durch Zuführen von Energie, dadurch gekennzeichnet, daß die Energie über mindestens zwei mit Wechselstrom betriebene, wassergekühlte und mit gegenüber der Metallschmelze inertem Gas arbeitende Plasmabrenner mit übertragenem Lichtbogen zugeführt wird.

2. Verfahren nach Anspruch 1, dadurch gekennzeichnet, daß die Brennflecke der von den einzelnen Plasmabrennern erzeugten Lichtbögen auf dem Badspiegel der Metallschmelze von der Mittelachse des Aufnahmegefäßes einen Mittenabstand aufweisen, der 3/10 des Radius der Innenwand des Aufnahmegefäßes in Höhe des jeweiligen Badspiegels nicht überschreitet.

3. Verfahren nach Anspruch 1, dadurch gekennzeichnet, daß die Plasmabrenner mit Argon betrieben werden.

4. Verfahren nach Anspruch 1, dadurch gekennzeichnet, daß die Plasmabrenner in einem Abstand von der Metallschmelze gehalten werden, der nicht weniger als 100 mm und nicht mehr als 500 mm beträgt.

5. Verfahren nach Anspruch 4, dadurch gekennzeichnet, daß die Plasmabrenner in einem Abstand von der Metallschmelze gehalten werden, der nicht weniger als 200 mm und nicht mehr als 400 mm beträgt.

6. Verfahren nach Anspruch 4 oder 5, dadurch gekennzeichnet, daß

- der Mittenabstand (r) der Brennflecken von der Mittelachse des Aufnahmegefäßes in mm,

- der Abstand (l) der Brennermündung vom Badspiegel in mm und

- der über die Elektrode des Brenners fließende Bogenstrom (I) in kA

im Rahmen der Beziehung

$$r = (0,375...0,625) \, l$$
$$x \, (0,755 + 0,315 \, kA^{-1/2} \, \sqrt{I})$$

eingestellt und betrieben werden.

7. Verfahren nach Anspruch 1, dadurch gekennzeichnet, daß die Plasmabrenner in einer zur Mittelachse des Aufnahmegefäßes nicht parallelen Stellung betrieben werden, wobei die Brennermündung den geringsten Abstand von der Mittelachse aufweist.

8. Verfahren nach Anspruch 7, dadurch gekennzeichnet, daß die Plasmabrenner in einer unter einem spitzen Winkel gegen die Mittelachse des Aufnahmegefäßes geneigten Stellung betrieben werden.

9. Verfahren nach Anspruch 8, dadurch gekennzeichnet, daß

- der Mittenabstand (r) der Brennflecken von der Mittelachse des Aufnahmegefäßes in mm,

- der Abstand (l) der Brennermündung vom Badspiegel in mm,

- der über die Elektrode des Brenners fließende Bogenstrom (I) in kA und

- der spitze Winkel ($\alpha$), unter dem die Plasmabrenner gegen die Mittelachse des Aufnahmegefäßes geneigt sind,

im Rahmen der Beziehung

$$r = (0,375 ... 0,625) \, l$$
$$\times \, (0,755 + 0,315 \, kA^{-1/2} \sqrt{I} - 0,75 \tan \alpha)$$

eingestellt und betrieben werden.

10. Verfahren nach Anspruch 1, dadurch gekennzeichnet, daß zwei oder eine durch zwei teilbare Anzahl von Plasmabrennern mit zweiphasigem Wechselstrom betrieben werden.

11. Verfahren nach Anspruch 1, dadurch gekennzeichnet, daß drei oder eine durch drei teilbare Anzahl von Plasmabrennern mit Drehstrom in Mittelpunktschaltung betrieben wird, wobei die Metallschmelze verbrauchsseitig den Mittelpunkt darstellt.

12. Verfahren nach Anspruch 1, dadurch gekennzeichnet, daß zumindest während eines Teils der Energiezufuhr durch die Plasmabrenner gegenüber der Metallschmelze inertes Gas von unten in die Metallschmelze eingegeben wird.

13. Verfahren nach Anspruch 1, dadurch gekennzeichnet, daß zumindest während eines Zeitintervalls der Energiezufuhr durch die Plasmabrenner gegenüber der Metallschmelze inertes Gas seitlich von einer Höhe in die Metallschmelze eingegeben wird.

14. Verfahren nach Anspruch 1, dadurch gekennzeichnet, daß auf der Schmelze etwa vorhandene erstarrte Schlackenkrusten vor dem Zünden der Plasmabrenner durch von unten in die Metallschmelze eingeführtes Gas aufgebrochen und zur Seite gespült werden.

15. Verfahren nach Anspruch 1, dadurch gekennzeichnet, daß der Raum des Aufnahmegefäßes über der Metallschmelze vor dem Zünden der Plasmabrenner unter Überdruck mit Inertgas gefüllt wird.

16. Verfahren nach Anspruch 15, dadurch gekennzeichnet, daß die Plasmabrenner zunächst
oberhalb der Metallschmelze gezündet werden
und dann an die Metallschmelze angenähert
werden.

17. Vorrichtung zum Durchführen des Verfahrens
nach den Ansprüchen 1 bis 16 mit einem mit
einer Abdeckung versehenen Aufnahmegefäß
für die Metallschmelze und mit durch in der
Abdeckung befindliche Durchgangsöffnungen geführte Elektroden,
dadurch gekennzeichnet,
daß die Elektroden durch jeweils die zentrische
Elektrode eines wassergekühlten Plasmabrenners (14)
gebildet sind
und daß die Abdeckung (5) mit gegen die Plasmabrenner (14) gasdicht ausgebildete Durchlaßöffnungen (18) versehen ist.

18. Vorrichtung nach Anspruch 17, dadurch gekennzeichnet, daß die Plasmabrenner (14) in einer
von einer Hubvorrichtung (16) betätigten gemeinsamen Halteanordnung (15) befestigt sind.

19. Vorrichtung nach Anspruch 18, dadurch gekennzeichnet, daß die Plasmabrenner (14") in einem
Bodeneinsatz (41) eines zentralen Rohres (42)
befestigt sind, das durch eine gasdichte
Durchlaßöffnung (43) in der Abdeckung (44)
auf- und abbewegbar ist, wobei sowohl der
Bodeneinsatz (41) als auch die Mantelwand
des zentralen Rohres (42) wassergekühlt sind.

20. Vorrichtung nach Anspruch 19, dadurch gekennzeichnet, daß der Bodeneinsatz (41) und die Mantelwand des zentralen Rohres (42) mit einem feuerfesten Material beschichtet sind.

21. Vorrichtung nach Anspruch 20, dadurch gekennzeichnet, daß das die Plasmabrenner (54) tragende Zentralrohr (49) teleskopartig ausgebildet ist.

22. Vorrichtung nach einem der Ansprüche 17 bis 21, dadurch gekennzeichnet, daß die Plasmabrenner (14') eine zur Mittelachse (2') des Aufnahmegefäßes (2, 2a, 2b) nicht parallele Stellung einnehmen, wobei die Brennermündung den geringsten Abstand von der Mittelachse (2') aufweist.

23. Vorrichtung nach Anspruch 22, dadurch gekennzeichnet, daß die Plasmabrenner (14') eine unter einem spitzen Winkel ($\alpha$) gegen die Mittelachse (2') des Aufnahmegefäßes (2, 2a, 2b) geneigte Stellung einnehmen.

24. Vorrichtung nach Anspruch 17, dadurch gekennzeichnet, daß die Abdeckung (27a, 27b) einen die Durchlaßöffnung bzw. die Durchlaßöffnungen (18') aufweisenden separaten Zentralbereich (32) hat.

25. Vorrichtung nach Anspruch 17, dadurch gekennzeichnet, daß die Abdeckung als das Aufnahmegefäß (2) einschließender Kessel (36, 37) ausgebildet ist.

26. Vorrichtung nach Anspruch 17, dadurch gekennzeichnet, daß die Abdeckung (5) einen Abgasstutzen (8) aufweist, der alternativ über ein Druckbegrenzungsventil (12) oder eine Vakuumpumpe (13) mit der Atmosphäre verbindbar ist.

27. Vorrichtung nach Anspruch 17, dadurch gekennzeichnet, daß an der Abdeckung (5) eine auf den Innenraum des Aufnahmegefäßes gerichtete Entfernungsmeßeinrichtung (19) angeordnet ist.

FIG.1

FIG.2

FIG.3

0180741

2/4

FIG.4

FIG.6

FIG.5

**Europäisches Patentamt**

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | IRON AND STEEL ENGINEER, Band 61, Nr. 7, Juli 1984, Seite 26, Pittsburgh, Pennsylvania, US; "3-Phase, A-C Plasma Furnaces for Metallurgical Processes" * Insgesamt * | 1,3,8, 10,11, 17 | C 21 C 7/00<br>B 22 D 41/00<br>C 21 C 5/52 |
| A | DE-A-2 951 120 (VEB EDELSTAHLWERK) | | |
| A | GB-A-1 384 259 (WILSON et al.) | | |
| A | PATENTS ABSTRACTS OF JAPAN, Band 8, Nr. 266 (C-255) [1703], 6. Dezember 1984; & JP - A - 59 140 324 (HITACHI SEISAKUSHO K.K.) 11-08-1984 | | |
| A | PATENTS ABSTRACTS OF JAPAN, Band 6, Nr. 169 (C-122) [1047], 2. September 1982; & JP - A - 57 85 921 (HITACHI SEISAKUSHO K.K.) 28-05-1982 | | RECHERCHIERTE SACHGEBIETE (Int Cl.4)<br><br>C 21 C<br>B 22 D<br>C 22 B |
| X | PATENTS ABSTRACTS OF JAPAN, Band 8, Nr. 67 (C-216) [1504], 29. März 1984; & JP - A - 58 221 220 (SHIN NIPPON SEITETSU K.K.) 22-12-1983 | 1,3 | |

Der vorliegende Recherchenbericht wurde für alle Patentansprüche erstellt.

| Recherchenort | Abschlußdatum der Recherche | Prüfer |
|---|---|---|
| DEN HAAG | 15-01-1986 | OBERWALLENEY R.P.L.I |